# EUROPEAN PATENT SPECIFICATION

(11) **EP 3 164 986 B1**
(45) Date of publication and mention of the grant of the patent: **06.02.2019**
(21) Application number: 15733394.9
(22) Date of filing: 24.06.2015
(51) Int. Cl.: H04N 5/225, H04N 5/235, G03B 15/07, H04N 5/222

(54) **PHOTOGRAPHY DEVICE**
FOTOGRAFIEVORRICHTUNG
DISPOSITIF PHOTOGRAPHIQUE

(30) Priority: 04.07.2014 SE 1450843
(43) Date of publication of application: 10.05.2017
(73) Proprietor: Mindy AB, 113 56 Stockholm (SE)
(72) Inventor: BESKOW, Martin, 113 56 Stockholm (SE)
(74) Representative: AWA Sweden AB
(86) International application number: PCT/EP2015/064224
(87) International publication number: WO 2016/001031

(56) References cited:
- WO-A2-2010/007420
- JP-A- 2014 081 474
- US-A1- 2013 293 770
- US-B1- 8 676 045

## Description

### Field of the invention

The invention disclosed herein relates generally to the field of photography devices. More precisely, it relates to a photography device and method for illuminating and capturing light from an object to be photographed.

### Background of the invention

Photographic lighting relates to the art of illuminating scenes or objects to be photographed. Illumination is e.g. of interest in controlling and manipulating the image in terms of accurate rendition of the object, and for desired effects e.g. associated with shadowing and direction, brightness and colour of the illumination. Lighting may also create the two-dimensional pattern of contrast the human brain may interpret to recognise three-dimensional objects in photographs. Photographic lighting may also be of interest in connection with computer aided editing of captured images, especially electronically captured images.

Photographic lighting is known to be provided by means of various illumination sources, such as lamps, diffusers and reflectors for directly or indirectly illuminating the object. The type, shape, location and direction of the illumination source are examples of parameters of interest for a photographer trying to achieve a desired illumination of the object. By varying the intensity and perceived origin of the light, the object can be illuminated from beneath, the side, the back, the front etc. in order to achieve the desired illumination. Further, by varying the homogeneity and lateral extension of a light beam, effects of contrast can be obtained.

With regard to the large amount of parameters affecting the illumination, such as shape, number, position, intensity and direction of the illumination sources, there is a need for new and improved photography devices capable of providing a desired illumination.

Document US 2013/0293770 A1 relates to a photography system for capturing high quality pictures of a person or a product situated in a photographic zone (60). The photographic zone is created by using three 'side' grid structures (20, 30, 40) and one 'top' grid structure (50). Each grid structure supports twelve equal sized diffused panels (160) and is associated with a light system (180, 190, 200, 210) so as to form a 'lighting wall'. Each light system includes an associate frame and is connected to a motorized carriage movably connected to the rear of the grid structure by a gantry system 80 allowing each light system to be positioned behind one of the diffusion panels of the grid structure. Each light system is controlled remotely for on/off, X-Y axis movement, rotation (i.e. orientation relative to the photographic zone 60) and power level. A camera (230) disposed in an appropriate location within the photographic zone (60) is used for capturing high quality pictures of a person or a product.

### Summary of the invention

According to a first general aspect, there is provided a photography device according to independent claim 1.

In a second aspect, a method of capturing light according to independent claim 13 is provided.

It will be appreciated that the term 'field of view' (abbreviated FOV) should be understood as the angular extent of a given scene that is imagined by the image capturing device. The field of view thus refers to that part of the world that is visible through the image capturing device at a particular position and orientation in space. Objects or regions outside the FOV during the exposure time are not represented in the resulting image. Similarly, objects or regions physically located within the FOV but obscured from the image capturing device during the whole exposure time are not captured in the image. If said objects or regions are partly obscured, such as obscured for a merely a part of the exposure time, they will however at least partly contribute to the resulting image.

'Obscuring means' may refer to a piece of material that can be arranged to hide or obscure a portion of the FOV such that the portion is not visible through the image capturing device. The obscuring means may e.g. comprise a surface facing the image capturing device and thus being captured in place of the obscured portion of the FOV. By using the obscuring means for shielding the light source such that light from the light source is prevented, or at least partly prevented from directly entering the image capturing device, the image capturing device can be protected from glaring. Moving the obscuring means such that its total contribution to the final image is evenly distributed over the field of view, a resulting image may be provided wherein the photographed object appears to be illuminated by a light source not being visible in the FOV. The contributing surface of the obscuring means may advantageously have a homogeneous appearance in order to further improve its perceived invisibility in the image. The contributing surface may however also have an optically distinguishable pattern or structure that can be used for adding a desired visible effect to the resulting image. Further, the obscuring means may be partly light transmitting, i.e. transmit a small amount of the light emitted by the light source. Some of the light is thereby entered into the image capturing device trough the obscuring means, which hence may add a filter-like effect to the resulting image.

The photography device is based on the underlying insight that the obscuring means may be cancelled out from an image if the obscuring means during the exposure time is moved across the field of view such that each point of the visible surface of the obscuring means, i.e. each point of the obscuring means that is visible from the image capturing device, contributes essentially equally to each portion of the resulting image. In other words, the exposure of the obscuring means may be essentially constant over the entire image so as to allow for the imaged obscuring means to be cancelled out from the resulting image. This effect may e.g. be achieved by scanning the obscuring means with an essentially constant speed over a plane perpendicular to the optical axis of the image capturing device. In case of a linear obscuring means extending across the FOV, e.g. extending laterally between two opposing sides of the FOV, the obscuring means may be scanned vertically across the FOV with an essentially constant speed. The obscuring means thereby spends an essentially equal amount of time in any portion of the FOV of the image capturing device during the exposure time, and hence the contribution of the obscuring means, or exposure, may be essentially evenly distributed over the image. The term 'essentially equal amount of time' should be understood to include times having a relative difference of 10% or less. It will however be appreciated that the speed and/or amount of time can be slightly varied so as to compensate for a varying illumination intensity. The accumulated contribution, or exposure, of the obscuring means to a portion of the image may be expressed as a function of time spent by the obscuring means in the specific position and the intensity of light from the surface of the obscuring means, which surface is captured by the image capturing device. The intensity of light from the surface of the obscuring means may vary during the exposure time. The exposure may e.g. be increased due to increased intensity of scattered light indirectly illuminating the obscuring means. An increased intensity of light captured from of the obscuring means may e.g. be compensated by a momentarily increased speed of motion of the obscuring means so as to maintain a relatively constant exposure of the obscuring means. Similarly, a reduced intensity of light captured from the obscuring means may be compensated by a momentarily reduced speed of the obscuring means so as to maintain a relatively constant exposure and thereby allow for the obscuring means to be cancelled out from the image.

The light source and the obscuring means may be moved in a scanning movement in any plane intersecting the FOV. Consequently, the speed of the motion may be adjusted so as to compensate for a curvature of the plane - a movement in a direction parallel to the optical axis may e.g. be performed at a relatively high speed as compared with the speed of a movement in a direction perpendicular to the optical axis in order to allow for the obscuring means to obscure each position of the FOV, as seen from the image capturing device, for essentially an equal amount of time. The same reasoning may apply for a light source and obscuring means moving along e.g. a helical path enclosing the illuminated object, wherein the speed of motion may be varied so as to obtain an essentially constant exposure of the obscuring means.

The photography device and method according to these aspects are advantageous in that the object can be illuminated from a location in the field of view without the light source being visible in the resulting image. Since the obscuring means is moved such that each position of the field of view is obscured for essentially an equal amount of time, the total contribution of the obscuring means to the final image, i.e. the total exposure of the obscuring means, mat be essentially evenly distributed over the field of view and hence not distinguishable for an observer. The position from where the illumination is provided may therefore be chosen irrespective of its relative location to the image capturing device. This provides a large degree of freedom when controlling and designing the illumination of the photographed object.

In prior art technology, the object usually is illuminated by a plurality of lamps, diffusers and reflectors that either contribute actively to the illumination, e.g. by generating light that is directed towards the object, or passively by reflecting light generated by other illumination sources. As a consequence, it may be necessary to remove lamps, diffusers and reflectors from the scene so as to avoid unintentional passive illumination caused by light that is reflected in illumination sources for the moment not in use.

The present aspects are advantageous in that they reduce the risk of such passive, unintentional illumination from light sources not in use. Since the photography device is capable of generating illumination that appears to originate from an illumination screen, reflector or lamp light source, or in other words capable of 'simulating' a desired illumination source by means of its light source, the amount of light reflected at the light source may be less than the light reflected from an illumination source corresponding to the simulated one. In one example, which is discussed for illustrative purposes, the photography device may be provided with a first light source moving in a plane in front of the object and a second light source moving in a plane behind the object. The first light source may e.g. simulate an illumination screen providing frontlighting of the object whereas the second light source simulates an illumination screen providing backlighting. The second light source may be obscured, e.g. by the obscuring means obscuring the first light source or by a second obscuring means, such that light emitted from the second light source is prevented from directly entering the image capturing device. However, the second light source may also be arranged and/or moved such that light emitted from the second light source directly enters the image capturing device, thereby simulating a light emitting surface or structure arranged in the FOV and behind the object. In case only frontlighting is desired, the second light source may remain (inactivated) outside of the FOV during the exposure time. The amount of light reflected at the second light source, thereby passively contributing to the backlighting of the object, may hence be reduced or even negligible as compared with the light that may be reflected at a corresponding illumination screen arranged behind the object. This advantageously allows for several different illumination scenes to be provided without the need for moving and adjusting the position of prior art lamps, diffusers, reflectors etc.

In the context of the present application, the terms 'light source' and 'light emitting element' are used to define substantially any device or element that is capable of emitting radiation in any region or combination of regions of the electromagnetic spectrum, for example the visible region, the infrared region, and/or the ultraviolet region, when activated e.g. by applying a potential difference across it or passing a current through it. Therefore a light source can have monochromatic, quasi-monochromatic, polychromatic or broadband spectral emission characteristics. Examples of light sources include semiconductor, organic, or polymer/polymeric light-emitting diodes (LEDs). The light source may be attached to the obscuring means, which may be adapted to provide an electrical connection between the obscuring means and the light source. One or several actuators may be provided to move the light source and/or the obscuring means.

The photography device may be adapted to allow for several scanning sessions during the exposure time or during one photography session. This advantageously allows for different illumination scenarios to be subsumed in one image, or captured in a respective image or data file. In one example, a set of different types of illumination sources and/or location of the illumination sources may be simulated in a respective scan and stored in separate data files, images or channels so as to enable subsequent offline or online image processing by means of e.g. an image processing software. Examples of different illumination scenarios may e.g. include backlighting, frontlighting and downlighting of the object.

The image capturing device may e.g. be a camera capable of capturing radiation in any region or combination of regions of the electromagnetic spectrum, such as the visible region, the infrared region, and/or the ultraviolet region. The camera may advantageously be a digital camera adapted to output digital image data, and may be synchronized with the movement of the obscuring means and/or the light source. Further, the image capturing device may be synchronized with the operation of the light source so as to enable light to be captured in response to the light source being switched on or off, or in response to a variation in the illumination intensity.

In one embodiment, the light source is adapted to be arranged between the image capturing device and the illuminated object. This advantageously provides a photography device wherein the illumination can be generated directly in front of the object without being perceived by an observer studying the captured image. The light source may e.g. be arranged or moved such that the entire FOV is relatively evenly illuminated so as to simulate homogenous frontlighting from an illumination screen arranged between the image capturing device and the object. The light source may also be switched on and off, or at least operated at varying light intensities, during the exposure time. By e.g. switching on the light source on at positions close to the middle of the FOV, a spot illumination generated from a spot light source positioned close to the middle of the FOV may be simulated. In the present embodiment the light source may be attached to the obscuring means, which advantageously allows for the obscuring means and the light source to be operated by the same actuator.

In one embodiment, the light source comprises a plurality of light emitting elements. The light emitting elements may e.g. be arranged in a linear array, or in a plurality of linear arrays that e.g. may be parallel to each other, in one or several circles, ovals, spirals, squares or any other suitable arrangements. The arrangement or distribution of light emitting elements may be chosen so as to obtain a desired illumination pattern. A light source having a linear array of light emitting elements at least distributed across the whole width of the FOV may provide a simulated homogenous screen illumination, whereas e.g. a light source having light emitting elements arranged in a spot covering only a portion of the width of the FOV may provide a simulated linear source of illumination in the resulting image.

In one embodiment, at least two of the plurality of light emitting elements can be individually controlled. This advantageously allows for the illumination intensity and/or illumination pattern to be varied between or during scans. As an example, a linear array of light emitting elements extending across the FOV may be used for simulating a spot illumination by increasing the illumination intensity close to the position of the simulated spot and by reducing or turning off the illumination at positions farther away from the spot position. Turning off all light emitting elements but one or a few at a certain position in the array provides a simulated linear illumination source arranged along the path of the said position. Some or all of the light emitting elements may be possible to control such that the illumination of at least a portion of the FOV can be temporarily reduced during the exposure time. In one example, the illumination intensity may be reduced as the obscuring means obscures the object or at least a portion of the object. As the obscuring means passes in front of the object (as seen from the image capturing device), all light emitting elements but the ones passing in front of the object may be turned off. In another example, the FOV may be relatively small compared to the total area illuminated by the light source and obscured by the obscuring means during the exposure time. In this case, the illumination intensity may be reduced as the obscuring means obscures portions of the FOV by turning off all light emitting elements but the ones passing in the FOV. Reducing the illumination intensity as the obscuring means (at least partly) obscures the object and/or FOV advantageously allows for the intensity of light captured from the obscuring means to be reduced and hence for the exposure of the obscuring means to be reduced.

In one embodiment, the light source is adapted to emit light with an essentially constant light intensity during the exposure time. An essentially constant light intensity is advantageous in that the light source can be moved with an essentially constant speed for providing an essentially homogenous illumination the path of the movement of the light source. A relatively homogenous illumination may facilitate the cancelling-out of the obscuring means from the captured image.

In one embodiment, the first actuator and/or the second actuator may be adapted to move the light source and/or the obscuring means with an essentially constant speed. Additionally, or alternatively, the light source and/or the obscuring means may be moved step-by-step, or stepwise, between different positions of the FOV. The light source may e.g. be adapted to emit light during a dwell time in a certain position, and to be inactivated or turned off as the obscuring means is moving between two positions.

In one embodiment, the obscuring means extends across the FOV, e.g. vertically or laterally. Each position of the FOV may thereby be obscured by the obscuring means by moving the obscuring means in just one dimension. As an example, an obscuring means extending laterally across the FOV may be considered. By moving the obscuring means in a vertical direction across the FOV, each position of the FOV may be obscured by the obscuring means in a single movement. The same reasoning also applies for other configurations, wherein the obscuring means extend across the FOV in a first direction and wherein the obscuring means may be moved in a second direction substantially orthogonal to the first direction. Arranging the obscuring means in a lateral direction advantageously allows for the movement to be induced by means of gravitational force.

In one embodiment, a plurality of obscuring means extend parallel to each other across the FOV so as to form a grid or lattice. By arranging the obscuring means in a regular pattern at equidistant positions relative to each other, the time required for obscuring each position of the FOV can be reduced. It may be sufficient to move the obscuring means a distance corresponding to the grating constant of the grid in order to cancel out the obscuring means from the resulting image. Since the grating constant may be chosen to be less than the total distance across the FOV, the exposure time and/or moving speed of the obscuring means may be reduced. A reduced exposure time may be advantageous when photographing other objects than still life objects, such as e.g. moving objects.

In one embodiment, the obscuring means is adapted to be arranged in front of the object and the light source is adapted to be arranged behind the object, as seen from the image capturing device. This advantageously allows for the object to be illuminated from behind without glaring the image capturing device.

The invention may be embodied as computer-readable instructions for controlling a programmable computer in such manner that it performs the photography method outlined above. Such instructions may be distributed in the form of a computer-program product comprising a computer-readable medium storing the instructions.

Further objectives of, features of and advantages with the present invention will become apparent when studying the following detailed disclosure, the drawings and the appended claims.

### Brief description of the drawings

The above, as well as additional objects, features and advantages of the present invention, will be better understood through the following illustrative and non-limiting detailed description of embodiments of the present invention. Reference will be made to the appended drawings, on which:
figures 1a and b illustrate a side view of a photography device arranged to photograph an object in accordance with an embodiment of the present invention;
figure 2 shows a top view of a photography device and an object according another embodiment;
figures 3a and b illustrate the arrangement of two obscuring means in relation to an object, seen from the image capturing device;
figure 4 shows a similar view as in figures 3a and b, wherein the photography device comprises a plurality of parallel obscuring means;
figure 5 schematically illustrates a scanning movement of an obscuring means across the field of view according to an embodiment of the invention; and
figures 6a and b show a side view of a photography device according to a further embodiment of the present invention.

All the figures are schematic and generally only show parts which are necessary in order to elucidate the invention, whereas other parts may be omitted or merely suggested. Like reference numerals refer to like elements throughout.

### Detailed description of embodiments

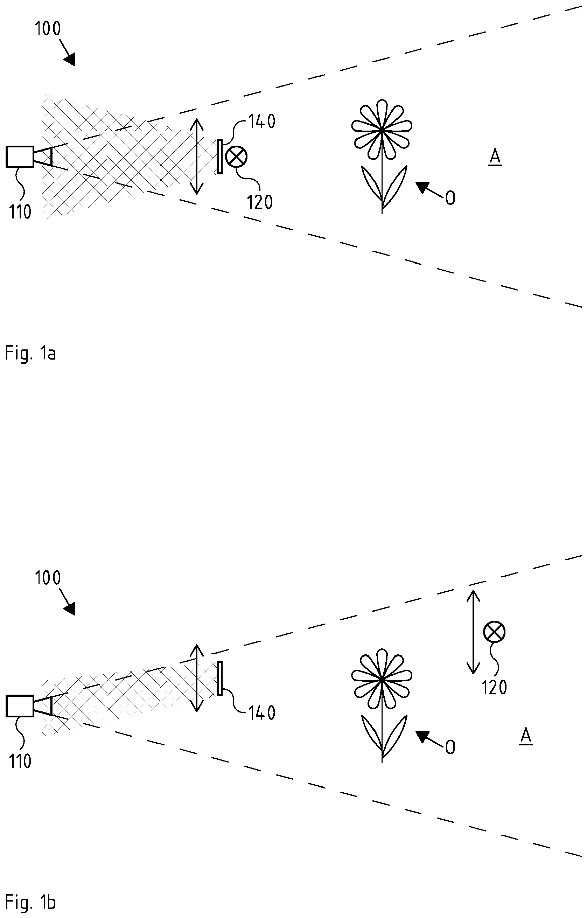

Figure 1a shows a side view of a photography device 100 arranged to photograph a scene, such as an object O. The photography device 100 comprises an image capturing device, such as a camera 110, adapted to capture light from a field of view A during an exposure time. In figure 1 the FOV A is defined by dashed lines. Hence, the dashed lines delimit the angular extent the FOV. The photography device 100 further comprises a light source 120 which is adapted to illuminate the object O, either by a direct illumination or by indirect illumination. The light source 120 may e.g. comprise a light emitting diode (LED) and can be moved in the FOV A by means of a first actuator (not shown). The direction of movement is indicated by an arrow. An obscuring means, such as e.g. a screen 140, is provided in front of the light source 120 (as seen from the camera 110) so as to obscure the light source 120 from the camera 110 and thereby reduce the risk of glare. The obscured region is indicated by diagonal cross-hatching. The screen 140 may be actuated, or moved, in the FOV A by means of a second actuator (not shown). The first and/or second actuator(s) may e.g. be realized by a gantry or the like.

During operation, the screen 140 is moved in the FOV A such each position of the FOV A is obscured for essentially an equal amount of time during the exposure time.

Figure 1b shows an embodiment of a photography device 100 similar to the device described with reference to figure 1a. In the present embodiment, however, the object O can be positioned between the light source 120 and the screen 140 such that the screen 140 is located in front of the object O and the light source 120 behind the object O as seen from the camera. A back light illumination of the object O may thereby be provided.

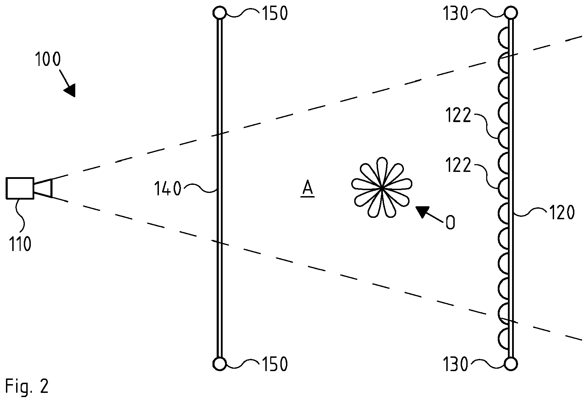

Figure 2 shows a top view of a photography device 100 similarly configured as the photography devices described with reference to figures 1a and 1b. In the present embodiment the screen 140 and the light source 120 are oppositely arranged on a respective side of the object O. The screen 140 may be movable in a plane perpendicular to the optical axis of the camera 100 by means of a second actuator 150 that may be arranged outside the FOV A. The light source 120 may comprise a plurality of light emitting elements 122 arranged in a linear array which, according to the present embodiment, extends laterally across the FOV A. The light emitting elements 122 may e.g. be light emitting diodes (LEDs), each of which being individually controllable. The intensity of the emitted light may e.g. be varied as a function of time and/or position of the respective light emitting element 122 so as to provide a desired or predetermined illumination of the object O. Alternatively, or additionally, the light emitting elements 122 may be switched on and off at various positions in the FOV A. Further, a first actuator 130 may be arranged to move the light source 120 in the field of view during the exposure time. It will however be realized that the light source 120 and the screen 140 may be operated and moved independently as long as the screen 140 obscures the light source 120 from the camera 110.

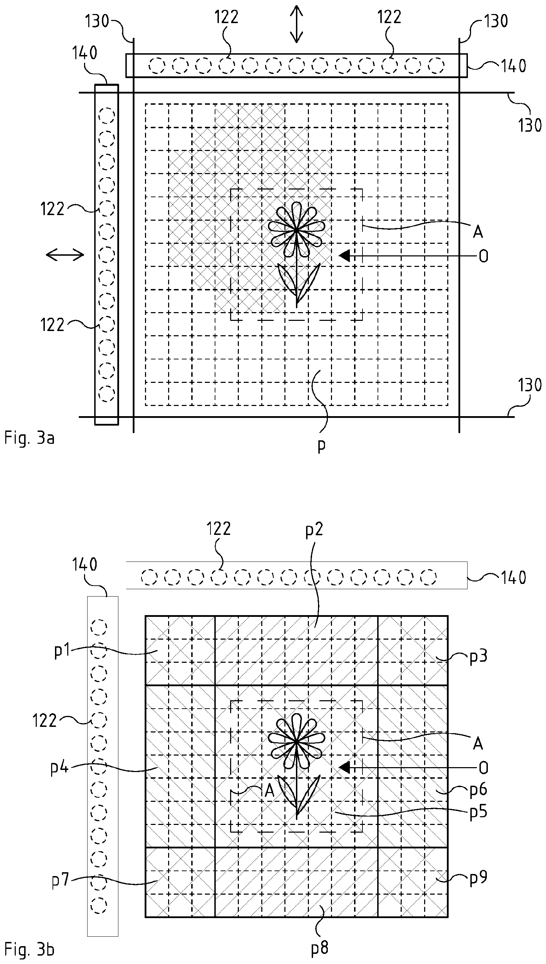

With reference to figures 3a and b, the operation of a photography device similar to the photography devices described in connection with figures 1a-b and 2 is described. According to the embodiment of figure 3a, the photography device 100 comprises two bar-shaped obscuring means 140 extending across (and beyond) the FOV A, which in figure 3 is shown from the position of the image capturing device, or camera 110, and indicated by a dashed line. In this embodiment, the FOV A forms a part of the total area covered by the two bar-shaped obscuring means 140. The first obscuring means may extend laterally across the FOV A and the second obscuring means may extend vertically across said FOV A. A first actuator 130 may be arranged to guide and move both obscuring means in a lateral and vertical direction, respectively. The respective directions of movement are indicated by arrows. A plurality of light emitting elements 122 (indicated by dotted lines) are arranged on the rear side of the obscuring means 140 and adapted to illuminate the object O arranged in the FOV A. For illustrative purposes, the FOV A and the area possible to obscure by the obscuring means 140 in the present figure 3a is divided into a plurality of portions p, or pixels, by a grid. As shown in figure 3a, each portion p may represent, or indicate, the position of a light emitting element 122 at a given instant of time as the light source 120 and screen 140 moves, e.g. towards, across and past the FOV A. During the exposure time, the lateral and/or vertical screen 140 and its respective light emitting elements 122 may be scanned over the FOV with a constant speed, or stepwise between each row/column of pixels p of the FOV A such that the screen(s) dwell in each pixel p of the FOV A for an essential equal amount of time. The light source 120 may be turned off when moving from one pixel row/column to the next. The respective light emitting elements 122 may further be individually operated, such as e.g. switched on and off, during the scan. In figure 3, a cross-hatched area is indicated and represents the pixels p in which the corresponding light emitting elements 122 of the vertical and/or lateral light sources 120 are switched on. Outside the cross-hatching, the light emitting elements 122 are inactivated. It will be appreciated that the illuminated pixels p, which are represented by the cross-hatching, may be combined in various numbers and into various shapes and distributions so as to achieve a desired illumination of the object O. In one example, the vertical obscuring means 140 may be scanned across the FOV A as the lateral obscuring means 140 may remain outside of the FOV A. The lateral obscuring means 140 may be scanned in a subsequent session, in which the vertical obscuring means 130 may remain outside the FOV A. In another example, both obscuring means 140 may be scanned simultaneously across the FOV A.

Figure 3b shows the operation of a similar photography device 100 as described with reference to figure 3a, with the difference that the pixels p may be arranged in a number of sub-groups, or regions pn, such as e.g. p1, p2,..., p9. Each region pn may represent a portion of the area that can be obscured by the obscuring means 140, and in which region pn the illumination may be either set at a predetermined level, or turned off as the light source 120 passes by. Each region pn may hence be illuminated by the corresponding light emitting elements 122 of the vertical and/or lateral light source 120 as said light emitting elements 122 pass over said regions pn. In the example illustrated in the present figure, the regions p2 and p8 are only illuminated as the corresponding light emitting elements 122 of the lateral light source 120 pass over the respective regions p2 and p8. Further, the regions p4 and p6 are only illuminated as the corresponding light emitting elements 122 of the vertical light source 120 pass over the respective regions p4 and p6. The remaining regions p1, p3, p5, p7 and p9 may be illuminated by the passing light emitting elements 122 of the vertical and/or lateral light source 120.

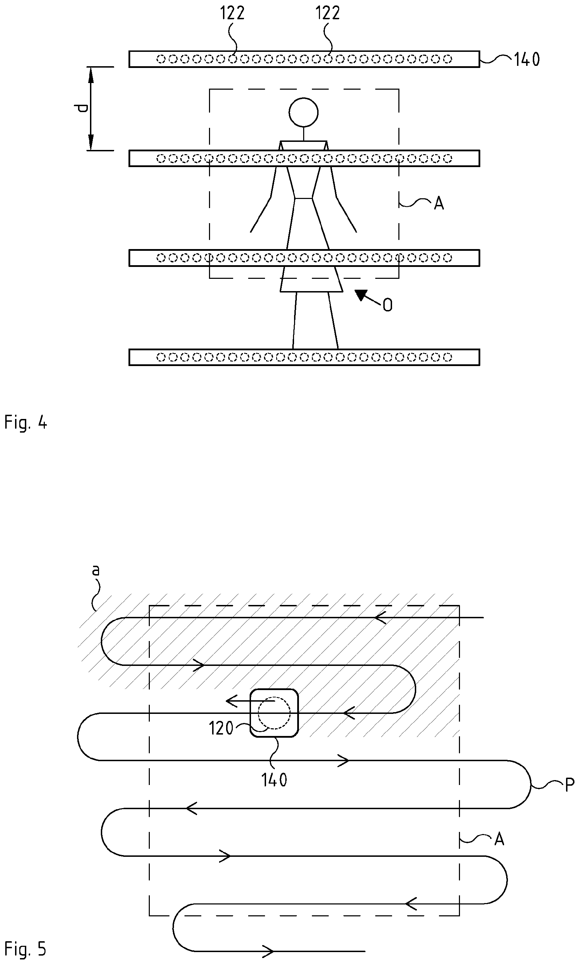

Figure 4 shows a part of a photography device 100 similarly configured as the devices described with reference to the previous figures. In the present embodiment, the photography device 100 comprises a plurality of obscuring means 140, such as e.g. four parallel rod-shaped screens 140 extending laterally across the FOV A, which is viewed from the position of the camera 110. Each screen is vertically separated by a distance, or grating constant, d and provided with a plurality of light emitting elements 122 facing the object O. In figure 4 the position of the light emitting elements 122 are indicated by dotted lines and the object O represented by a human subject. During the exposure time, each one of the screens 140 are moved in the FOV A vertically between the camera 110 and the object O. By arranging the screens 140 equidistantly, each position of the FOV A can be obscured by the screens 140 for essentially an equal amount of time during the exposure time by moving the screens the distance d, or multiples of d. Since the distance d can be chosen such that it is less than the total distance across the FOV A, the exposure time and/or moving speed of the obscuring means 140 can be reduced as well.

Figure 5 schematically illustrates a scanning procedure during an exposure time. The scanning procedure may be combined with a photography device similar to the devices described with reference to the preceding figures, wherein the obscuring means 140 may be moved in several directions in order to obscure each position of the FOV A during the exposure time. In the present figure, the obscuring means has the form of a quadrangle. The position of the light source 120 is indicated by a dashed line within the quadrangle. The light source 120 may e.g. be arranged in front of the object (not shown) or behind the object as seen from the camera 110. Similarly, the obscuring means 140 may e.g. be arranged in front of the object or behind said object, as long as it is arranged to obscure the camera from the light source 120 during the exposure time. The obscured positions of the FOV are indicated by a hatched area. During the exposure time, the obscuring means may be moved along a path (indicated by the line P) in a scanning motion such that each position of the FOV A may be obscured for an essentially equal amount of time.

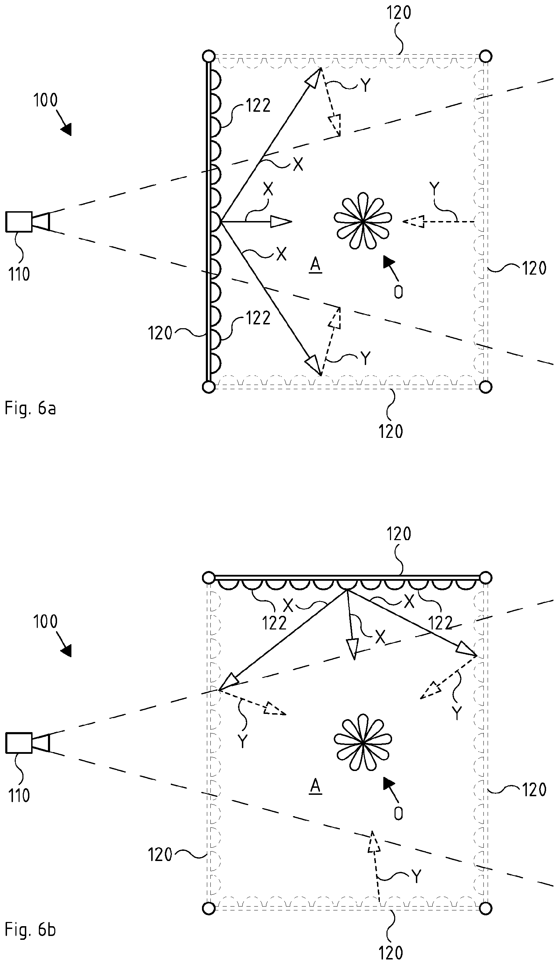

Figure 6a and b show a top view of a photography device 100 similar to the previously described photography devices. According to the present embodiment, the photography device 100 comprises an image capturing device 110 adapted to capture light from a FOV A, and four light sources 120 arranged on a respective obscuring means 140. The light sourced comprise a linear array of individually controllable light emitting elements 122 configured to illuminate the object O from different directions, such as e.g. from the back, from the front and from the sides. The obscuring means 140 are guided by actuators arranged to move the obscuring means 140 and the light sources 120 in the FOV A during the exposure time. In figure 6a, the light source 120 arranged closest to the camera 110 is turned on, whereas the remaining light sources 120 are inactive. The object O may therefore mainly be illuminated by a direct front illumination. Even though some of the light emitted from the active light source 120 may be reflected from the inactive light sources 120 and hence indirectly illuminate the object O from the side and/or back, the reflected intensity may be sufficiently low to be neglected. This is advantageous over prior art technology, which utilizes relatively large lamps and/or reflectors so as to illuminate the object, since the surface of the light source 120 according to the present invention may be relatively small compared with the surface of such lamps or reflectors. Since light may be unintentionally reflected at prior art lamps and reflectors not in use, and hence passively contribute to the illumination of the object, it is advantageous to reduce the surface of the light sources and screens so as to reduce the amount of reflected light.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effectuated by those skilled in the art without departing from the scope of the invention as defined in the appended claims. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A photography device (100), comprising:
an image capturing device (110) adapted to capture an image by capturing light entering the image capturing device from a field of view during an exposure time;
a light source (120) adapted to be arranged in the field of view of the image capturing device and to illuminate an object visible in the field of view; actuating means (130,150) adapted to move the light source in the field of view during the exposure time;
an obscuring means (140) adapted to obscure a portion of the field of view such that said portion is not visible for the image capturing device; actuating means (130,150) adapted to, during the exposure time, move the obscuring means such that:
each position of the field of view is obscured by the obscuring means for an amount of time, wherein a relative difference between the times for obscuring the different positions of the field of view is 10% or less; and
light from the light source is prevented from directly entering the image capturing device.

2. The photography device according to claim 1, wherein the light source is adapted to be arranged between the image capturing device and the object.

3. The photography device according to claim 1 or 2, wherein the light source comprises a plurality of light emitting elements (122).

4. The photography device according to claim 3, wherein the plurality of light emitting elements are arranged in a linear array.

5. The photography device according to claim 4, wherein the light source comprises a plurality of parallel linear arrays.

6. The photography device according to any one of claims 3 to 5, wherein the intensity of light emitted from at least two of the light emitting elements can be individually controlled.

7. The photography device according to any one of the preceding claims, wherein the light source is adapted to emit light with an essentially constant intensity during the exposure time.

8. The photography device according to any one of the preceding claims, wherein the obscuring means extends laterally or vertically across the field of view.

9. The photography device according to claim 8, comprising a plurality of parallel obscuring means extending across the field of view.

10. The photography device according to any one of the preceding claims, wherein the actuating means are adapted to move the light source and the obscuring means, respectively, with an essentially constant speed.

11. The photography device according to claim 1, wherein the obscuring means is adapted to be arranged in front of the object and the light source is adapted to be arranged behind the object, as seen from the image capturing device.

12. The photography device according to claim 1, wherein light source is a linear light source.

13. A method of capturing light from an object visible in a field of view of an image capturing device (110) adapted to capture an image by capturing light entering the image capturing device, wherein the following steps are performed during an exposure time:
illuminating the object by means of a light source (120), the light source being arranged in the field of view;
moving the light source in the field of view by means of actuating means (130,150);
obscuring a portion of the field of view by means of an obscuring means (140) such that said portion is not visible for the image capturing device;
moving the obscuring means by actuating means (130,150) such that each position of the field of view is obscured by the obscuring means for an amount of time, wherein a relative difference between the time for obscuring the different positions of the field of view is 10% or less, and such that light from the light source is prevented from directly entering the image capturing device.

## Patentansprüche

1. Fotografievorrichtung (100), umfassend:
eine Bildaufnahmevorrichtung (110), die geeignet ist, um ein Bild aufzunehmen, indem sie Licht aufnimmt, das während einer Belichtungszeit aus einem Sichtfeld in die Bildaufnahmevorrichtung eintritt;
eine Lichtquelle (120), die geeignet ist, um in dem Sichtfeld der Bildaufnahmevorrichtung angeordnet zu sein und um ein Objekt zu beleuchten, das in dem Sichtfeld zu sehen ist;
Betätigungsmittel (130, 150), die geeignet sind, um die Lichtquelle in dem Sichtfeld während der Belichtungszeit zu bewegen;
ein Verdunkelungsmittel (140), das geeignet ist, um einen Abschnitt des Sichtfelds derart zu verdunkeln, dass der Abschnitt für die Bildaufnahmevorrichtung nicht zu sehen ist;
Betätigungsmittel (130, 150), die geeignet sind, um während der Belichtungszeit das Verdunkelungsmittel derart zu bewegen, dass:
jede Position des Sichtfelds durch das Verdunkelungsmittel während einer gewissen Zeit verdunkelt ist, wobei eine relative Differenz zwischen den Zeiten für die Verdunkelung der verschiedenen Positionen des Sichtfelds 10 % oder weniger beträgt; und
verhindert wird, dass Licht aus der Lichtquelle direkt in die Bildaufnahmevorrichtung eintritt.

2. Fotografievorrichtung nach Anspruch 1, wobei die Lichtquelle geeignet ist, um zwischen der Bildaufnahmevorrichtung und dem Objekt angeordnet zu sein.

3. Fotografievorrichtung nach Anspruch 1 oder 2, wobei die Lichtquelle eine Vielzahl von Licht emittierenden Elementen (122) umfasst.

4. Fotografievorrichtung nach Anspruch 3, wobei die Vielzahl von Licht emittierenden Elementen in einer linearen Anordnung angeordnet ist.

5. Fotografievorrichtung nach Anspruch 4, wobei die Lichtquelle eine Vielzahl von parallelen linearen Anordnungen umfasst.

6. Fotografievorrichtung nach einem der Ansprüche 3 bis 5, wobei die Stärke von Licht, das von mindestens zweien der Licht emittierenden Elemente emittiert wird, individuell gesteuert werden kann.

7. Fotografievorrichtung nach einem der vorhergehenden Ansprüche, wobei die Lichtquelle geeignet ist, um während der Belichtungszeit Licht mit einer im Wesentlichen konstanten Stärke zu emittieren.

8. Fotografievorrichtung nach einem der vorhergehenden Ansprüche, wobei sich das Verdunkelungsmittel seitlich oder senkrecht über das Sichtfeld erstreckt.

9. Fotografievorrichtung nach Anspruch 8, umfassend eine Vielzahl von parallelen Verdunkelungsmitteln, die sich über das Sichtfeld erstrecken.

10. Fotografievorrichtung nach einem der vorhergehenden Ansprüche, wobei die Betätigungsmittel geeignet sind, um die Lichtquelle und die Verdunkelungsmittel jeweils mit einer im Wesentlichen konstanten Geschwindigkeit zu bewegen.

11. Fotografievorrichtung nach Anspruch 1, wobei das Verdunkelungsmittel geeignet ist, um vordem Objekt angeordnet zu sein, und die Lichtquelle geeignet ist, um hinter dem Objekt angeordnet zu sein, von der Bildaufnahmevorrichtung aus gesehen.

12. Fotografievorrichtung nach Anspruch 1, wobei die Lichtquelle eine lineare Lichtquelle ist.

13. Verfahren zum Aufnehmen von Licht von einem Objekt, das in einem Sichtfeld einer Bildaufnahmevorrichtung (110) zu sehen ist, die geeignet ist, um ein Bild aufzunehmen, indem sie Licht aufnimmt, das in die Bildaufnahmevorrichtung eintritt, wobei während einer Belichtungszeit die folgenden Schritte ausgeführt werden:
Beleuchten des Objekts anhand einer Lichtquelle (120), wobei die Lichtquelle in dem Sichtfeld angeordnet ist;
Bewegen der Lichtquelle in dem Sichtfeld anhand von Betätigungsmitteln (130, 150);
Verdunkeln eines Abschnitts des Sichtfelds anhand eines Verdunkelungsmittels (140), so dass der Abschnitt für die Bildaufnahmevorrichtung nicht zu sehen ist;
Bewegen des Verdunkelungsmittels durch die Betätigungsmittel (130, 150), so dass jede Position des Sichtfelds durch das Verdunkelungsmittel während einer gewissen Zeit verdunkelt ist, wobei eine relative Differenz zwischen der Zeit zum Verdunkeln der verschiedenen Positionen des Sichtfelds 10 % oder weniger beträgt, und sodass verhindert wird, dass Licht aus der Lichtquelle direkt in die Bildaufnahmevorrichtung eintritt.

## Revendications

1. Dispositif photographique (100), comprenant :
un dispositif de capture d'image (110) adapté pour capturer une image en capturant la lumière entrant dans le dispositif de capture d'image à partir d'un champ de vision pendant un temps d'exposition;
une source lumineuse (120) adaptée pour être disposée dans le champ de vision du dispositif de capteur d'image et illuminer un objet visible dans le champ de vision ;
un moyen d'actionnement (130,150) adapté pour déplacer la source lumineuse dans le champ de vision pendant le temps d'exposition ;
un moyen d'obscurcissement (140) adapté pour obscurcir une portion du champ de vision de sorte que ladite portion ne soit pas visible pour le dispositif de capture d'image ;
un moyen d'actionnement (130,150) adapté pour, pendant le temps d'exposition, déplacer le moyen d'obscurcissement de sorte que :
chaque position du champ de vision soit obscurcie par le moyen d'obscurcissement pour une quantité de temps, dans lequel une différence relative entre les temps pour obscurcir les différentes positions du champ de vision est de 10 % ou inférieur ; et
la lumière provenant de la source lumineuse soit empêchée d'entrer directement dans le dispositif de capture d'image.

2. Dispositif photographique selon la revendication 1, dans lequel la source lumineuse est adaptée afin d'être disposée entre le dispositif de capture d'image et l'objet.

3. Dispositif photographique selon la revendication 1 ou 2, dans lequel la source lumineuse comprend une pluralité d'éléments émetteurs de lumière (122).

4. Dispositif photographique selon la revendication 3, dans lequel la pluralité d'éléments émetteurs de lumière sont disposés en un réseau linéaire.

5. Dispositif photographique selon la revendication 4, dans lequel la source lumineuse comprend une pluralité de réseaux linéaires parallèles.

6. Dispositif photographique selon une quelconque des revendications 3 à 5, dans lequel l'intensité de la lumière émise à partir d'au moins deux des éléments émetteurs de lumière peut être contrôlée individuellement.

7. Dispositif photographique selon une quelconque des revendications précédentes, dans lequel la source lumineuse est adaptée pour émettre de la lumière avec une intensité essentiellement constante pendant le temps d'exposition.

8. Dispositif photographique selon une quelconque des revendications précédentes, dans lequel le moyen d'obscurcissement s'étend latéralement ou verticalement au travers du champ de vision.

9. Dispositif photographique selon la revendication 8, comprenant une pluralité de moyens d'obscurcissement parallèles s'étendant au travers du champ de vision.

10. Dispositif photographique selon une quelconque des revendications précédentes, dans lequel le moyen d'actionnement est adapté pour déplacer la source lumineuse et le moyen d'obscurcissement, respectivement, avec une vitesse essentiellement constante.

11. Dispositif photographique selon la revendication 1, dans lequel le moyen d'obscurcissement est adapté afin d'être disposé en face de l'objet et la source lumineuse est adaptée afin d'être disposée derrière l'objet, tel que vu à partir du dispositif de capture d'image.

12. Dispositif photographique selon la revendication 1, dans lequel la source lumineuse est une source lumineuse linéaire.

13. Procédé de capture de lumière à partir d'un objet visible dans un champ de vision d'un dispositif de capture d'image (110) adapté pour capturer une image en capturant la lumière entrant dans le dispositif de capture d'image, dans lequel les étapes suivantes sont effectuées pendant un temps d'exposition :
illuminer l'objet au moyen d'une source lumineuse (120), la source lumineuse étant disposée dans le champ de vision ;
déplacer la source lumineuse dans le champ de vision au moyen du moyen d'actionnement (130,150) ;
obscurcir une portion du champ de vision au moyen d'un moyen d'obscurcissement (140) de sorte que ladite portion ne soit pas visibles pour le dispositif de capture d'image ;
déplacer le moyen d'obscurcissement par le moyen d'actionnement (130,150) de sorte que chaque position du champ de vision soit obscurcie par le moyen d'obscurcissement pour une quantité de temps, dans lequel une différence relative entre le temps pour obscurcir les différentes positions du champ de vision est 10 % ou inférieur, et de sorte que la lumière provenant de la source lumineuse soit empêchée d'entrer directement dans le dispositif de capture d'image.
